# EUROPEAN PATENT APPLICATION

(11) **EP 4 708 474 A1**
(43) Date of publication of application: **11.03.2026**
(21) Application number: 25194497.1
(22) Date of filing: 07.08.2025
(51) Int. Cl.: H01M 50/107, H01M 50/184, H01M 50/188, H01M 50/559

(54) **BATTERY CELL AND BATTERY MODULE INCLUDING THE SAME**

(30) Priority: 27.08.2024 KR 20240114725
(71) Applicant: SK On Co., Ltd., Seoul 03161 (KR)
(72) Inventor: KWAK, Seung Ho, 34124 Daejeon (KR)
(74) Representative: Prüfer & Partner mbB Patentanwälte · Rechtsanwälte

(57) **Abstract**

A battery cell includes a cell case including a sidewall forming an accommodation space and an upper plate having a through-hole, an electrode assembly disposed in the accommodation space of the cell case, a first current collector electrically connected to a first electrode tab of the electrode assembly, an electrode terminal electrically connected to the first current collector through the through-hole, and a gasket disposed between the electrode terminal and the upper plate and having electrical insulation properties, wherein the upper plate includes a flange portion formed along an edge of the through-hole, and the flange portion extends toward the inside of the cell case and includes an inclined surface extending from the upper plate.

## Description

### TECHNICAL FIELD

The disclosure and implementations disclosed in this patent document generally relate to a battery cell capable of being charged with and discharged of electricity and a battery module including the same.

### BACKGROUND

Unlike primary batteries, secondary battery cells have the convenience of being able to be charged with and discharged of electricity, and have thus come to prominence as a power source for various mobile devices, electric vehicles, energy storage devices, etc.

Secondary battery cells may be manufactured as a pouch-type cell or a can-type cell. The pouch-type cell has a structure in which an electrode assembly is accommodated inside a flexible cell case (pouch). The can-type cell has a structure in which an electrode assembly is accommodated inside a rigid cell case (can) and may be configured as a cylindrical cell, a prismatic cell, a coin-type cell, or the like.

### SUMMARY

A secondary battery cell may include an electrode assembly and a cell case accommodating the electrode assembly. The electrode assembly is connected to a current collector, and the current collector may be electrically connected to an electrode terminal. After the electrode terminal and a gasket are inserted through a through-hole of the cell case, the electrode terminal may be deformed so that the cell case and the electrode terminal may be riveted together. Here, the gasket between the cell case and the electrode terminal may be compressed by a deformed portion of the electrode terminal to perform sealing. However, there is a problem in securing the sealing ability through the gasket by simply installing the gasket.

The present disclosure may be implemented in some embodiments to provide a cell case having improved sealing ability of a gasket.

The battery cell of the present disclosure and the battery module including the same may be widely applied in green technology fields, such as electric vehicles, battery charging stations, and other solar power generation and wind power generation using batteries. In addition, the battery cell and the battery module including the same of the present disclosure may be used in eco-friendly electric vehicles, hybrid vehicles, or the like to ameliorate the effects of climate change by suppressing air pollution and greenhouse gas emissions.

In some embodiments of the present disclosure, a battery cell includes: a cell case including a sidewall forming an accommodation space and an upper plate having a through-hole; an electrode assembly disposed in the accommodation space of the cell case; a first current collector electrically connected to a first electrode tab of the electrode assembly; an electrode terminal electrically connected to the first current collector through the through-hole; and a gasket disposed between the electrode terminal and the upper plate and having electrical insulation properties, wherein the upper plate includes a flange portion formed along an edge of the through-hole, and the flange portion extends toward the inside of the cell case and includes an inclined surface extending from the upper plate.

The inclined surface may include a first inclined surface extending from an outer surface of the upper plate to the inside of the cell case.

The flange portion may further include an end surface formed at an end portion of the flange portion and connected to the first inclined surface, and the end surface has an inclination with respect to an inner surface of the upper plate.

The flange portion may further include a first edge formed at a boundary between the end surface and the first inclined surface and first compressing the gasket inwardly in a radial direction of the cell case.

A diameter of the through-hole at the first edge may be smaller than a diameter of the through-hole at the outer surface of the upper plate.

A diameter of the through-hole may decrease from the outer surface of the upper plate to the first edge.

A thickness of the gasket in the radial direction of the cell case decreases from the outer surface of the upper plate toward the first edge.

The inclined surface may further include a second inclined surface extending from the inner surface of the upper plate to the inside of the cell case, and the flange portion may further include a second edge formed at a boundary between the end surface and the second inclined surface and secondarily compressing the gasket in an inward direction of the cell case.

The second edge may protrude further into the inside of the cell case than the first inclined surface.

A vertical distance from the inner surface of the upper plate to the second edge may be 50% or more of a thickness of the upper plate.

An inclination of the first inclined surface with respect to an axis of the cell case may be 1 degree or more and 60 degrees or less.

A thickness of the flange portion may be less than or equal to a thickness of the upper plate.

The cell case may have a circular cross-sectional shape, and the through-hole may be formed in a center of the upper plate.

The electrode terminal may be riveted to the through-hole of the cell case.

The sidewall may have a tube shape, the upper plate may have a plate shape covering a top side of the accommodation space, and the sidewall and the upper plate may be formed integrally.

The battery cell may further include: a cap plate covering a bottom side of the accommodation space of the cell case, wherein the cap plate may be coupled to the cell case.

The battery cell may further include: a second current collector electrically connected to a second electrode tab of the electrode assembly; and a cap plate covering a bottom side of the accommodation space of the cell case, wherein the second current collector is electrically connected to at least one of the cap plate or the sidewall of the cell case.

In some embodiments of the present disclosure, a battery module includes: a plurality of battery cells; and a module housing accommodating the plurality of battery cells, wherein at least one of the plurality of battery cells includes: a cell case including a sidewall forming an accommodation space and an upper plate having a through-hole; an electrode assembly disposed in the accommodation space of the cell case; a first current collector electrically connected to a first electrode tab of the electrode assembly; an electrode terminal electrically connected to the first current collector through the through-hole; and a gasket disposed between the electrode terminal and the upper plate and having electrical insulation properties, wherein the upper plate includes a flange portion formed along an edge of the through-hole, and the flange portion extends toward the inside of the cell case and includes an inclined surface extending from the upper plate.

### BRIEF DESCRIPTION OF DRAWINGS

Certain aspects, features, and advantages of the present disclosure are illustrated by the following detailed description with reference to the accompanying drawings.
FIG. 1 is a perspective view of a battery cell according to an embodiment;
FIG. 2 is an exploded perspective view of the battery cell illustrated in FIG. 1;
FIG. 3 is a cross-sectional view taken along line I-I' of FIG. 1;
FIG. 4 is a cut-away perspective view of portion A of FIG. 2;
FIG. 5 is a cross-sectional view illustrating a portion of a cross-section taken along line II-II' of FIG. 2;
FIG. 6 is an enlarged view of portion B of FIG. 3;
FIG. 7 is a cross-sectional view illustrating a state before an electrode terminal is riveted to a through-hole according to an embodiment;
FIG. 8 is a cross-sectional view illustrating a state during a process in which an electrode terminal is riveted to a through-hole according to an embodiment;
FIG. 9 is a cross-sectional view illustrating a state in which an electrode terminal is riveted to a through-hole according to an embodiment; and
FIG. 10 is a perspective view of a battery module according to an embodiment.

### DETAILED DESCRIPTION

The same reference numerals or symbols respectively illustrated in the attached drawings denote parts or elements that perform the actually same functions. For convenience of description and understanding, the parts or elements will be described by using the same reference numerals or symbols even in different exemplary embodiments. In other words, although elements having the same reference numerals are all illustrated in a plurality of drawings, the plurality of drawings do not mean one exemplary embodiment.

As used herein, singular forms are intended to include plural forms as well, unless the context clearly indicates otherwise. It will be further understood that the terms "comprises," "comprising," etc. when used in this specification, specify the presence of stated features, integers, steps, operations, elements, and/or components, but do not preclude the presence or addition of one or more other features, integers, steps, operations, elements, components, and/or groups thereof.

In addition, in the present specification, the expressions, such as an upper side, a lower side, a side face, a rear surface, and the like, are described based on the drawings and may be expressed differently when the direction of the corresponding object is changed.

The terms including ordinal numbers, such as 'first,' 'second,' etc. may be used herein to distinguish elements from one another. These ordinal numbers are merely used to distinguish the same or similar elements from one another, and meanings of the terms are not construed as being limited by the using of the ordinal numbers. For example, use orders or arrangement orders of elements combined with these ordinal numbers are not limited by numbers thereof. The ordinal numbers may be redisposed with one another.

Hereinafter, the present disclosure will be described in detail with reference to the accompanying drawings. However, this is merely illustrative and the present disclosure is not limited to the specific embodiments described by way of example.

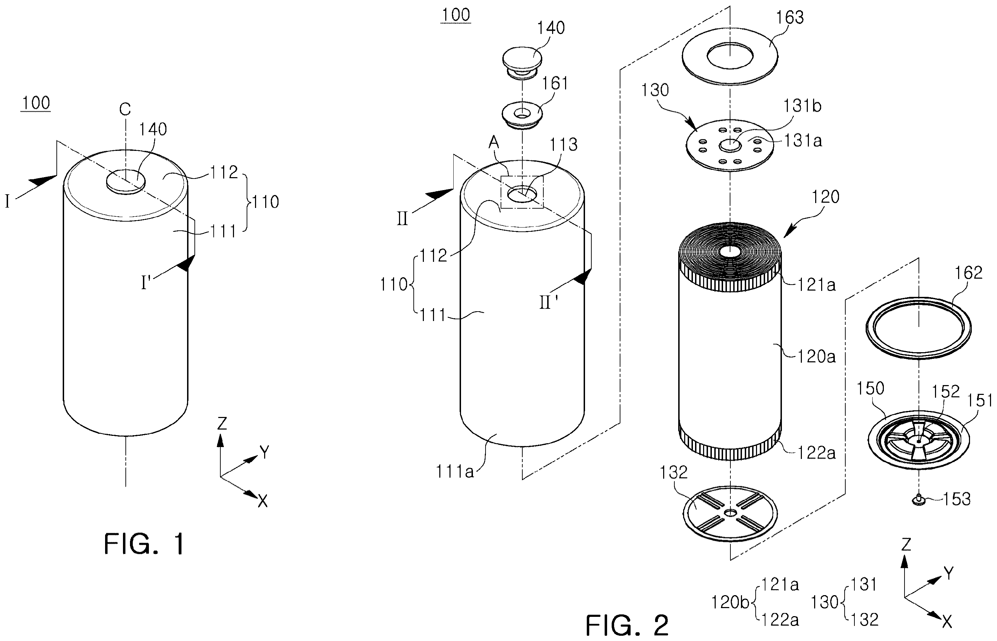

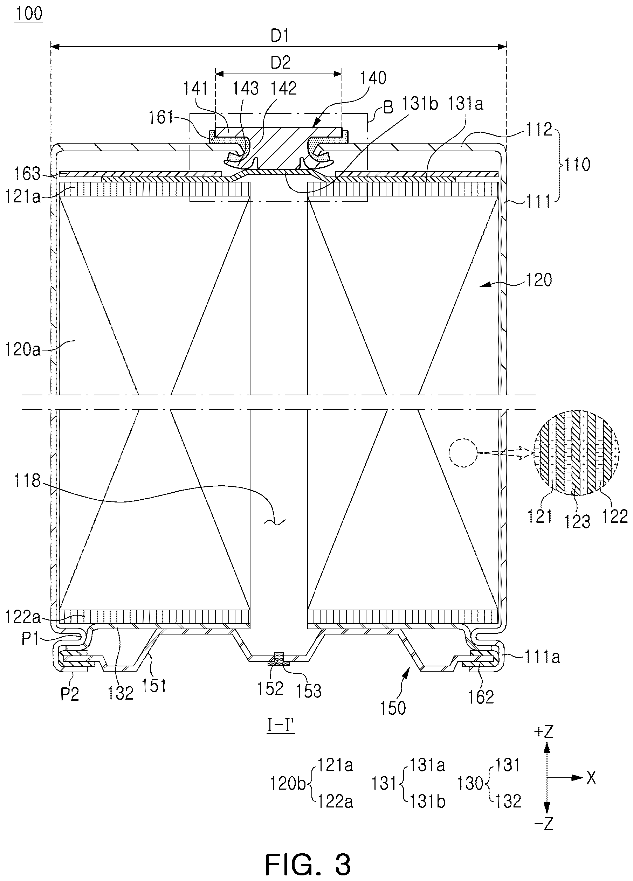

FIG. 1 is a perspective view of a battery cell according to an embodiment. FIG. 2 is an exploded perspective view of the battery cell illustrated in FIG. 1. FIG. 3 is a cross-sectional view taken along line I-I' of FIG. 1.

Referring to FIGS. 1 to 3, a battery cell 100 according to an embodiment may include a cell case 110 including a sidewall 111 forming an accommodation space 118 therein and an upper plate 112 having a through-hole 113 formed therein, an electrode assembly 120 disposed in the accommodation space 118 of the cell case 110, a first current collector 131 electrically connected to a first electrode tab 121a of the electrode assembly 120, an electrode terminal 140 electrically connected to the first current collector 131 through the through-hole 113, and a gasket 161 disposed between the electrode terminal 140 and the through-hole 113 and having electrical insulation.

The battery cell 100 according to the present disclosure may be configured as a cylindrical cell but is not limited thereto. In the present disclosure, the battery cell 100 according to an embodiment will be described using a cylindrical cell as an example.

The cell case 110 may include the sidewall 111 forming the accommodation space 118 therein and the upper plate 112 having the through-hole 113 formed therein. The accommodation space 118 may be formed by the sidewall 111 of the cell case 110 and the upper plate 112. The cell case 110 may have a cylindrical shape with one side open. The cell case 110 may have a hollow cylindrical shape including a circular cross-section.

The sidewall 111 may have a tube shape, and the upper plate 112 may have a plate shape covering the top side of the accommodation space 118.

The sidewall 111 may have a circular tube shape. The upper plate 112 may have an overall flat plate shape. The thickness of the upper plate 112 and the sidewall 111 in the cell case 110 may vary. For example, the upper plate 112 and the sidewall 111 may have the same thickness, or the thickness of the upper plate 112 may have a greater value than the thickness of the sidewall 111. The cell case 110 may include a metal material, such as aluminum or an aluminum alloy, but the material of the cell case 110 may vary.

As shown in FIGS. 1 to 3, the sidewall 111 and the upper plate 112 of the cell case 110 may be formed integrally. For example, the cell case 110 may be manufactured to have a shape in which the sidewall 111 and the upper plate 112 are formed integrally by deep-drawing a metal sheet. When the cell case 110 is formed integrally, a process of joining the sidewall 111 and the upper plate 112 is not required, so the manufacturing of the cell case 110 and/or the battery cell 100 may be facilitated and the workability may be improved.

However, the cell case 110 of the present disclosure is not limited to a configuration in which the sidewall 111 and the upper plate 112 are formed integrally, and the sidewall 111 and the upper plate 112 may also be manufactured separately and then joined or coupled to each other by welding or the like.

The through-hole 113 may be formed in the upper plate 112 of the cell case 110. The through-hole 113 may be provided to couple the electrode terminal 140. The cell case 110 may have a circular cross-sectional shape, and the through-hole 113 may be formed in the center of the upper plate 112. In this case, the electrode terminal 140 coupled to the through-hole 113 may be disposed in the center of the upper plate 112.

The electrode terminal 140 may be coupled to the through-hole 113. At least a portion of the electrode terminal 140 may be exposed to the outside of the cell case 110. In addition, at least a portion of the electrode terminal 140 may be disposed in the accommodation space 118 of the cell case 110 and may be electrically connected to the first current collector 131. That is, the electrode terminal 140 may be electrically connected to the first current collector 131 by passing through the through-hole 113. Therefore, when the first current collector 131 is connected to a positive electrode, the electrode terminal 140 may correspond to a positive electrode terminal, and vice-versa.

The electrode terminal 140 may be riveted to the through-hole 113 of the cell case 110. The electrode terminal 140 may be riveted to the upper plate 112 by riveting while being inserted into the through-hole 113 of the upper plate 112. The electrode terminal 140 may be riveted to the upper plate 112 of the cell case 110. The electrode terminal 140 may have a rivet shape as a whole.

The electrode terminal 140 may include a first portion 141 disposed above the upper plate 112, a second portion 142 extending downwardly from the first portion 141 and passing through the through-hole 113, and a third portion 143 extending from the second portion 142 and disposed below the upper plate 112. The first portion 141 may be disposed outside the cell case 110, and the third portion 143 may be disposed in the accommodation space 118 of the cell case 110. The third portion 143 may be deformed by pressure and extend radially outwardly of the cell case 110. The upper plate 112 may be disposed between the first portion 141 and the third portion 143. An outer diameter D2 of the first portion 141 and an outer diameter of the third portion 143 may have a value greater than the diameter of the through-hole 113, and an outer diameter of the second portion 142 may have a value smaller than the diameter of the through-hole 113. The outer diameter D2 of the first portion 141 may have a value smaller than an outer diameter D1 of the cell case 110. The outer diameter D2 of the first portion 141 may be set in consideration of a welding space with a busbar connected to the first portion 141.

The gasket 161 may be disposed between the electrode terminal 140 and the upper plate 112 for insulation between the electrode terminal 140 and the upper plate 112. The gasket 161 may include an electrically insulating material. The gasket 161 may serve as a sealing member sealing a space between the electrode terminal 140 and the upper plate 112.

The electrode terminal 140 may be inserted into the through-hole 113 on the outer side of the upper plate 112. Since the outer diameter D2 of the electrode terminal 140 has a size larger than the diameter of the through-hole 113, the first portion 141 of the electrode terminal 140 may be disposed on the outer side of the upper plate 112. The third portion 143 may be deformed by riveting, and thus, the electrode terminal 140 may be fixed to the upper plate 112.

When riveting is performed while the gasket 161 is disposed outside the electrode terminal 140, the gasket 161 may be disposed between the electrode terminal 140 and the upper plate 112. The gasket 161 may seal and/or insulate between the electrode terminal 140 and the upper plate 112.

The electrode assembly 120 may be disposed in the accommodation space 118 of the cell case 110. The electrode assembly 120 may include a positive electrode, a negative electrode, and a separator 123. The positive electrode and the negative electrode may each include a current collecting foil (or metal foil) and a mixture layer applied to at least one surface of the current collecting foil. The mixture layer may include an active material. The separator 123 may be interposed between the positive electrode and the negative electrode to electrically insulate the positive electrode and the negative electrode. The positive electrode, the negative electrode, and the separator 123 may be repeatedly disposed to form the electrode assembly 120. As an example, the electrode assembly 120 may have a winding shape in which the positive electrode, the separator 123, and the negative electrode are wound in a laminated state. However, the electrode assembly 120 is not limited to the winding structure. For example, the electrode assembly 120 may also have a stacking shape, a zigzag-folding shape, and a stack-folding shape.

The electrode assembly 120 may include a first electrode 121 and a second electrode 122 having different polarities. As an example, the first electrode 121 may be provided as a positive electrode and the second electrode 122 may be provided as a negative electrode, or vice-versa. The electrode assembly 120 may include a body 120a in which the first electrode 121 and the second electrode 122 are arranged with the separator 123 therebetween, and an electrode tab 120b extending from the first electrode 121 or the second electrode 122. The body 120a may include a coating portion (or a coated portion) on which an active material is applied, and the electrode tab 120b may include a non-coating portion (or an uncoated portion) on which an active material is not applied. The electrode tab 120b may have a shape overlapped or laid down in a certain shape.

The electrode tab 120b may include a first electrode tab 121a extending from the first electrode 121 and a second electrode tab 122a extending from the second electrode 122. The first electrode tab 121a may include a non-coating portion of the first electrode 121, and the second electrode tab 122a may include a non-coating portion of the second electrode 122.

The electrode tab 120b may be electrically connected to the current collector 130. The current collector 130 may include a first current collector 131 and a second current collector 132. The first electrode tab 121a may be electrically connected to the first current collector 131. As an example, the first electrode tab 121a and the first current collector 131 may be coupled and electrically connected to each other by welding or the like. The second electrode tab 122a may be electrically connected to at least one of the second current collector 132, a cap plate 150, or the sidewall 111 of the cell case 110. As an example, the second electrode tab 122a and the second current collector 132 may contact and be electrically connected to each other and may be coupled to each other by welding, such as ultrasonic welding, laser welding, etc. However, the method of coupling the second electrode tab 122a and the second current collector 132 is not limited thereto.

At least a portion of the first current collector 131 may be electrically connected to the first electrode tab 121a of the electrode assembly 120. In addition, at least a portion of the first current collector 131 may be electrically connected to the electrode terminal 140. As an example, the first current collector 131 and the first electrode tab 121a may be coupled to each other by welding, such as ultrasonic welding, laser welding, or resistance welding, but the coupling method is not limited thereto. The first current collector 131 and the electrode terminal 140 may be coupled to each other by welding, such as laser welding.

The first current collector 131 may include a main body portion 131a electrically connected to the first electrode tab 121a of the electrode assembly 120 and a central portion 131b protruding from the center and electrically connected to the electrode terminal 140.

The main body portion 131a of the first current collector 131 may be welded to the first electrode tab 121a. The main body portion 131a may be coupled to the first electrode tab 121a by laser welding, ultrasonic welding, or resistance welding, while being disposed to be in contact with the first electrode tab 121a.

The central portion 131b of the first current collector 131 and the electrode terminal 140 may be welded together by laser welding or the like.

The main body portion 131a and the central portion 131b of the first current collector 131 may have an integral structure.

An insulating member 163 having electrical insulation may be disposed between the first current collector 131 and the cell case 110 to electrically insulate the first current collector 131 and the cell case 110. As an example, the insulating member 163 may be disposed between the first current collector 131 and the upper plate 112. The shape or arrangement position of the insulating member 163 may vary.

The battery cell 100 according to an embodiment may additionally include the cap plate 150 covering a bottom side of the accommodation space 118 of the cell case 110. The cap plate 150 may be crimped or welded to the cell case 110.

The cap plate 150 may cover the accommodation space 118 on the opposite side to the electrode terminal 140.

The cap plate 150 may be coupled to the sidewall 111 of the cell case 110 by crimping, welding, etc. As an example, after a beading portion P1may be formed in an open end portion 111a of the sidewall 111 of the cell case 110 by performing a beading process, the cap plate 150 may be mounted on the beading portion P1 and the end portion 111a of the sidewall 111 and the cap plate 150 may be crimped to form a crimping portion P2. Alternatively, the cap plate 150 may also be welded to the end portion 111a of the sidewall 111.

The cap plate 150 may be formed with an injection hole 152 for injecting an electrolyte into the inside of the cell case 110. The injection hole 152 may be formed in the center of the body 151 of the cap plate 150, but a position and size thereof may vary. The injection hole 152 may be sealed with an injection hole plug 153 after the electrolyte is injected.

A cap gasket 162 for sealing may be disposed between the cap plate 150 and the sidewall 111 of the cell case 110. The cap gasket 162 may serve as a sealing member sealing a gap between the cap plate 150 and the sidewall 111.

According to an embodiment, the battery cell 100 may additionally include the cap plate 150 covering a bottom side of the accommodation space 118 of the cell case 110 and the second current collector 132 electrically connected to the second electrode tab 122a of the electrode assembly 120.

An upper surface of the second current collector 132 may be configured to be joined or contact the second electrode tab 122a so as to be electrically connected to the second electrode tab 122a. Welding may be used to join the second current collector 132 and the second electrode tab 122a. For example, the second current collector 132 and the second electrode tab 122a may be joined by ultrasonic welding, laser welding, resistance welding, or the like. Alternatively, the second current collector 132 may be electrically connected to the second electrode tab 122a in a mutually contacting state, without being joined thereto.

The second current collector 132 may be electrically connected to at least one of the cap plate 150 or the sidewall 111 of the cell case 110. FIG. 3 illustrates a configuration in which the second current collector 132 is electrically connected to the cap plate 150 and the sidewall 111 of the cell case 110. In this case, the cap plate 150 and the cell case 110 may have a second polarity. For example, when the second electrode tab 122a is a negative tab, the cap plate 150 and the cell case 110 may be charged with a negative electrode. An object electrically connected to the second current collector 132 may vary depending on the design specifications of the battery cell 100.

Meanwhile, it is also possible to have a configuration in which the second current collector 132 is not disposed and the second electrode tab 122a is directly electrically connected to the cap plate 150.

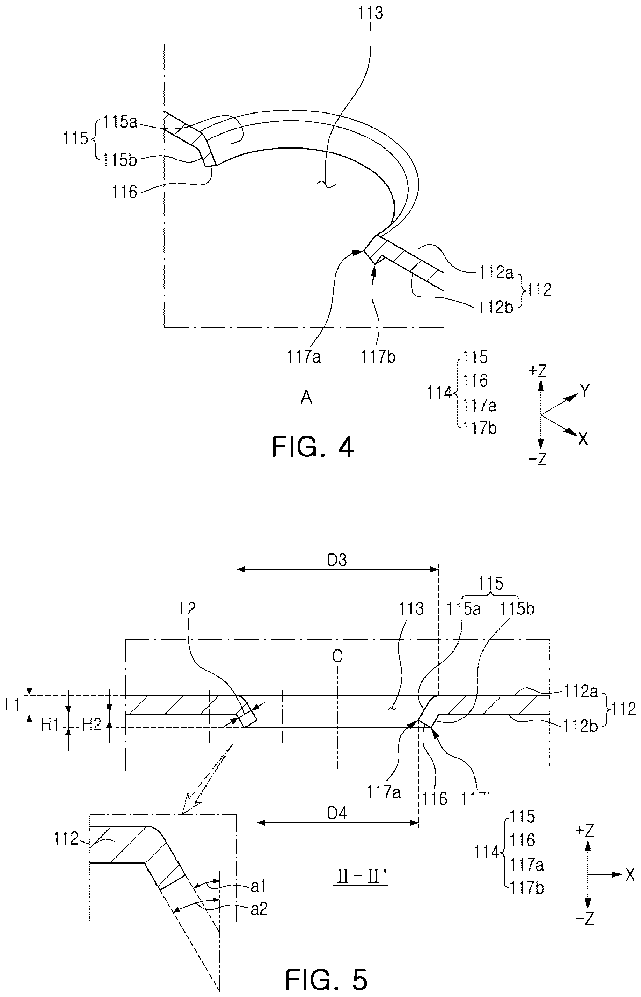

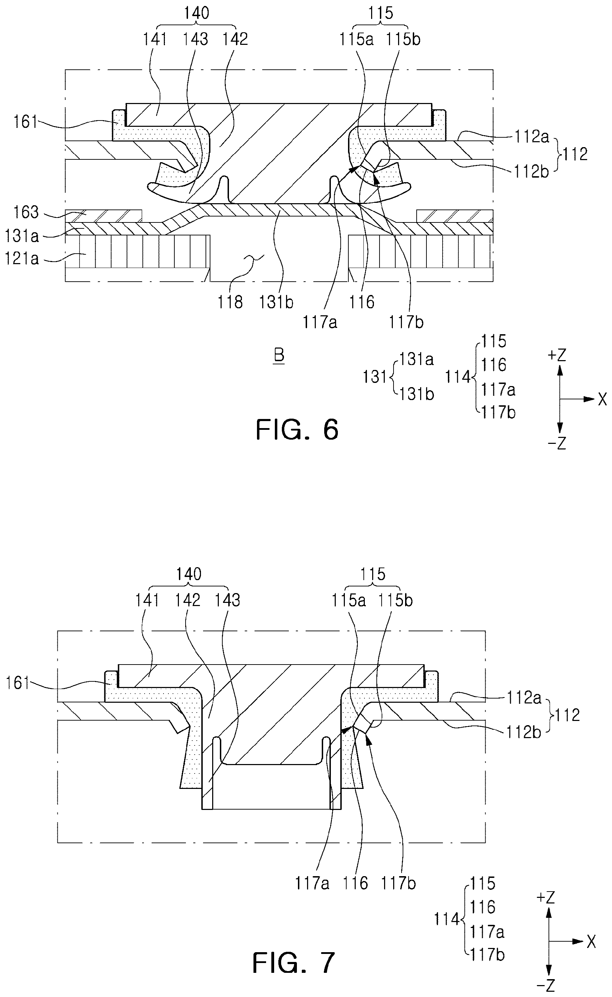

FIG. 4 is a cutaway perspective view of portion A of FIG. 2. FIG. 5 is a cross-sectional view illustrating a portion of a section taken along line II-II' of FIG. 2. FIG. 6 is an enlarged view of portion B of FIG. 3.

The description of the first electrode tab 121a, the first current collector 131, the electrode terminal 140, the gasket 161, the insulating member 163, the upper plate 112, and the through-hole 113 of FIGS. 1 to 3 may also be applied to FIGS. 4 to 6.

Referring to FIGS. 4 and 5, a flange portion 114 may be formed along the edge of the through-hole 113 of the upper plate 112. The flange portion 114 may extend toward the inside of the cell case (110 of FIG. 3). However, the direction in which the flange portion 114 is formed is not limited to the inside of the cell case (110 of FIG. 3). For example, the flange portion 114 may also extend toward the outside of the cell case (110 of FIG. 3).

The flange portion 114 may be formed through burring processing. The flange portion 114 may be formed by applying pressure to the through-hole 113 of the upper plate 112 using a punch. However, the method of forming the flange portion 114 through burring processing is only an example, and the method of forming the flange portion 114 is not limited thereto.

The flange portion 114 may include an inclined surface 115 extending from the upper plate 112. The inclined surface 115 may include a first inclined surface 115a extending from an outer surface 112a of the upper plate 112 to the inside of the cell case (110 in FIG. 3). The flange portion 114 may be formed at an end portion and may further include an end surface 116 connected to the first inclined surface 115a. The flange portion 114 may further include a first edge 117a formed at a boundary between the end surface 116 and the first inclined surface 115a.

As the first inclined surface 115a is inclined with respect to the axis C of the cell case 110, the first inclined surface 115a and the first edge 117a of the flange portion 114 may first compress the gasket 161 inwardly in the radial direction of the cell case 110. The first edge 117a is at least a portion of the first inclined surface 115a, and the first compression effect of compressing the gasket 161 inwardly in the radial direction of the cell case 110 may be maximized at the first edge 117a.

The inclined surface 115 may further include a second inclined surface 115b extending from the inner surface 112b of the upper plate 112 to the inside of the cell case 110. The flange portion 114 may further include a second edge 117b formed at a boundary between the end surface 116 and the second inclined surface 115b.

The end surface 116 may be inclined with respect to the inner surface 112b of the upper plate 112. As the end surface 116 is inclined with respect to the inner surface 112b of the upper plate 112, the second inclined surface 115b and the second edge 117b of the flange portion 114 may secondarily compress the gasket 161 in an inward direction (-Z) of the cell case 110. The second edge 117b is at least a portion of the end surface 116, and the second compression effect of compressing the gasket 161 in the inward direction (-Z) of the cell case may be maximized at the second edge 117b.

An inclination a1 of the first inclined surface 115a with respect to the axis C of the cell case 110 may be 1 degree or more and 60 degrees or less. If the inclination a1 of the first inclined surface 115a is less than 1 degree, the first compression of compressing the gasket inwardly in the radial direction of the cell case 110 may not be effective. In addition, when the inclination a1 of the first inclined surface 115a is 45 degrees, the first compression effect of compressing the gasket inwardly in the radial direction of the cell case 110 may be maximized. If the inclination a1 of the first inclined surface 115a exceeds 45 degrees, the effect of the first compression may gradually decrease, and if the inclination a1 of the first inclined surface 115a exceeds 60 degrees, it may be difficult to expect the effect of the first compression. However, if the gasket 161 may be compressed inwardly in the radial direction of the cell case 110, the inclination a1 of the first inclined surface 115a is not limited thereto.

The end surface 116 and the first inclined surface 115a may form a predetermined angle at the first edge 117a. As an example, the angle formed by the end surface 116 and the first inclined surface 115a may be 90 degrees. However, the angle formed by the end surface 116 and the first inclined surface 115a is not limited thereto.

A diameter D4 of the through-hole 113 at the first edge 117a may be smaller than a diameter D3 of the through-hole 113 at the outer surface of the upper plate 112. The diameter of the through-hole 113 may decrease from the outer surface of the upper plate 112 toward the first edge 117a. As a result, the diameter of the through-hole 113 may be minimized at the first edge 117a. As a result, the gasket 161 may be compressed more radially inwardly of the cell case 110 from the outer surface of the upper plate 112 toward the end portion of the flange portion 114, and the sealing capacity may be improved.

A thickness of the gasket 161 in the radial direction of the cell case 110 corresponding to the outer surface 112a of the upper plate 112 may be thicker than a thickness of the gasket 161 in the radial direction of the cell case 110 corresponding to the end portion of the flange portion 114. In addition, the thickness of the gasket 161 in the radial direction of the cell case 110 may decrease from the outer surface 112a of the upper plate 112 toward the first edge 117a. As a result, the sealing capacity of the gasket 161 may be maximized at the end portion of the flange portion.

An inclination a2 of the second inclined surface 115b with respect to the axis C of the cell case 110 may be the same as the inclination a1 of the first inclined surface 115a. However, depending on the thickness L2 of the flange portion 114, the inclination a2 of the second inclined surface 115b may not be the same as the inclination a1 of the first inclined surface 115a. For example, if the thickness L2 of the flange portion 114 decrease toward the end portion, the inclination a2 of the second inclined surface 115b may be greater than the inclination a1 of the first inclined surface 115a.

The second edge 117b may protrude further into the inside of the cell case 110 than the first inclined surface 115a. A vertical distance H1 from the inner surface 112b of the upper plate 112 to the second edge 117b may be greater than a vertical distance H2 from the inner surface 112b of the upper plate 112 to the first edge 117a. As a result, the gasket 161 may be compressed more in the inner direction (-Z) of the cell case 110 at the second edge 117b than at the first edge 117a, and the sealing capacity may be improved.

The thickness L2 of the flange portion 114 may be less than or equal to the thickness L1 of the upper plate 112.

If the thickness L2 of the flange portion 114 is greater than the thickness L1 of the upper plate 112, processing may be difficult. For example, since the flange portion 114 is formed by burring the upper plate 112, it may be difficult to form the flange portion 114 as the thickness of the flange portion 114 increases.

The thickness L2 of the flange portion 114 may be 100 or more of the thickness L1 of the upper plate 112.

If the thickness L2 of the flange portion 114 is thin, the rigidity may be weak and the flange portion 114 may be easily broken. For example, the flange portion 114 is to compress the gasket 161 during the riveting process of the electrode terminal 140, and here, if the thickness of the flange portion 114 is thin, the flange portion 114 may be damaged during the process. This may cause an increase in manufacturing cost due to a waste of materials.

The vertical distance H1 from the inner surface 112b of the upper plate 112 to the second edge 117b may be 50% or more of the thickness L1 of the upper plate 112.

If the vertical distance H1 from the inner surface 112b of the upper plate 112 to the second edge 117b is less than 50% of the thickness L1 of the upper plate 112, the degree of protrusion of the flange portion 114 protruding from the inner surface 112b of the upper plate 112 may not be sufficient, so the compression effect of the flange portion 114 in the inward direction (-Z) of the cell case 110 may be reduced.

The vertical distance H1 from the inner surface 112b of the upper plate 112 to the second edge 117b may be three times or less of the thickness L1 of the upper plate 112.

If the vertical distance H1 from the inner surface 112b of the upper plate 112 to the second edge 117b exceeds three times the thickness L1 of the upper plate 112, it may be difficult to process the flange portion, and the volume occupied by the flange portion 114 may increase, which may reduce the energy density.

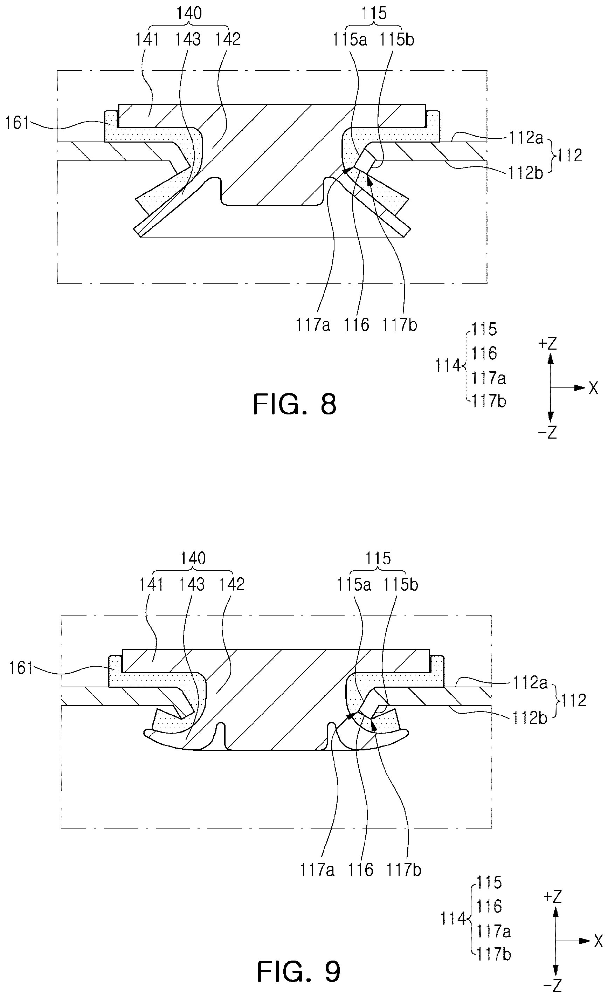

FIG. 7 is a cross-sectional view illustrating a state before an electrode terminal is riveted to a through-hole according to an embodiment. FIG. 8 is a cross-sectional view illustrating a state during a process in which an electrode terminal is riveted to a through-hole according to an embodiment. FIG. 9 is a cross-sectional view illustrating a state in which an electrode terminal is riveted to a through-hole according to an embodiment.

The description of the upper plate 112, the electrode terminal 140, and the gasket 161 of FIGS. 1 to 3 may also be applied to FIGS. 7 to 9. In addition, the description of the flange portion 114 of FIGS. 4 to 6 may also be applied to FIGS. 7 to 9.

Referring to FIG. 7, the electrode terminal 140 and the gasket 161 may be inserted into the through-hole 113. The gasket 161 may be positioned between the electrode terminal 140 and the upper plate 112 and may be compressed by the electrode terminal 140 and the upper plate 112. For example, at least a portion of the gasket between the first portion 141 of the electrode terminal 140 and the upper plate 112 may be compressed by the electrode terminal 140 in the inward direction (-Z) of the cell case 110.

In addition, at least a portion of the gasket 161 between the second portion 142 of the electrode terminal 140 and the first inclined surface 115a of the flange portion 114 may be deformed radially inwardly of the cell case 110. In other words, the first inclined surface 115a may deform at least a portion of the gasket 161 inwardly in the radial direction of the cell case 110.

Referring to FIG. 8, the electrode terminal 140 may be deformed at the third portion 143 in order to be riveted to the through-hole 113. By deforming the third portion 143, at least a portion of the gasket 161 may be first compressed radially inwardly of the cell case 110.

Referring to FIG. 9, in the riveted state, the gasket 161 may be compressed in a state in which at least a portion thereof is positioned between the third portion 143 of the electrode terminal 140 and the end surface 116 of the flange portion 114. The third portion 143 of the electrode terminal 140 may be deformed to be riveted and may compress at least a portion of the gasket 161. That is, the end surface 116 of the flange portion 114 may secondarily compress the gasket 161 in the inward direction (-Z) of the cell case 110.

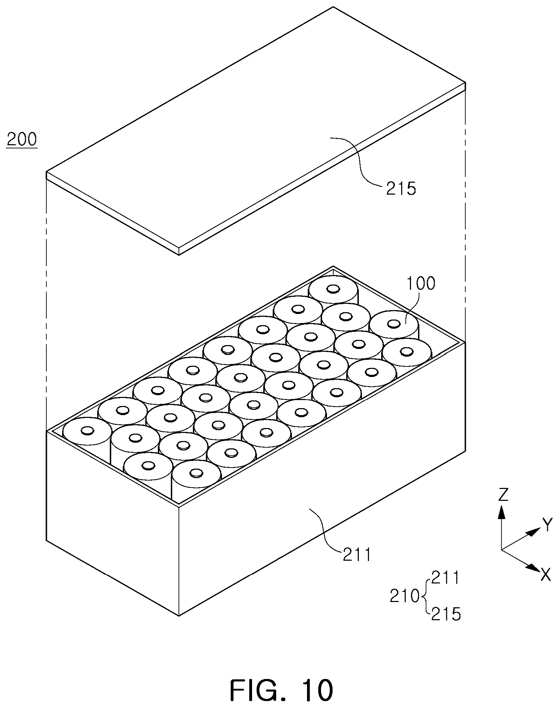

FIG. 10 is a perspective view of a battery module according to an embodiment.

The description of the battery cell 100 of FIGS. 1 to 9 may be equally applied to the battery cell 100 provided in a battery module 200 of FIG. 10.

Referring to FIG. 10, the battery module 200 according to an embodiment may include a plurality of battery cells 100 and a module housing 210 accommodating the plurality of battery cells 100.

The specific type of the battery module 200 of the present disclosure is not limited as long as it includes the plurality of battery cells 100. For example, the battery module 200 of the present disclosure is defined as including all of a battery pack or an energy storage device.

The module housing 210 may provide a space for accommodating the plurality of battery cells 100. The module housing 210 may include a housing body 211 forming a space for accommodating the plurality of battery cells 100 and a housing cover 215 covering the top side of the plurality of battery cells 100.

According to an aspect of the present disclosure, the cell case having improved sealing ability of the gasket may be provided.

Only specific examples of implementations of certain embodiments are described. Variations, improvements and enhancements of the disclosed embodiments and other embodiments may be made based on the disclosure of this patent document.

(Aspect 1) A battery cell comprising: a cell case including a sidewall forming an accommodation space and an upper plate having a through-hole; an electrode assembly disposed in the accommodation space of the cell case; a first current collector electrically connected to a first electrode tab of the electrode assembly; an electrode terminal electrically connected to the first current collector through the through-hole; and a gasket disposed between the electrode terminal and the upper plate and having electrical insulation properties, wherein the upper plate includes a flange portion formed along an edge of the through-hole, and wherein the flange portion extends toward the inside of the cell case and includes an inclined surface extending from the upper plate.

(Aspect 2) The battery cell of aspect 1, wherein the inclined surface includes a first inclined surface extending from an outer surface of the upper plate to the inside of the cell case.

(Aspect 3) The battery cell of aspect 2, wherein the flange portion further includes an end surface formed at an end portion of the flange portion and connected to the first inclined surface, and wherein the end surface has an inclination with respect to an inner surface of the upper plate.

(Aspect 4) The battery cell of aspect 3, wherein the flange portion further includes a first edge formed at a boundary between the end surface and the first inclined surface and first compressing the gasket inwardly in a radial direction of the cell case.

(Aspect 5) The battery cell of aspect 4, wherein a diameter of the through-hole at the first edge is smaller than a diameter of the through-hole at the outer surface of the upper plate.

(Aspect 6) The battery cell of aspect 4 or 5, wherein a diameter of the through-hole decreases from the outer surface of the upper plate to the first edge.

(Aspect 7) The battery cell of any one of aspects 4 to 6, wherein a thickness of the gasket in the radial direction of the cell case decreases from the outer surface of the upper plate toward the first edge.

(Aspect 8) The battery cell of any one of aspects 3 to 7, wherein the inclined surface further includes a second inclined surface extending from the inner surface of the upper plate to the inside of the cell case, and wherein the flange portion further includes a second edge formed at a boundary between the end surface and the second inclined surface and secondarily compressing the gasket in an inward direction of the cell case.

(Aspect 9) The battery cell of aspect 8, wherein the second edge protrudes further into the inside of the cell case than the first inclined surface.

(Aspect 10) The battery cell of aspect 8 or 9, wherein a vertical distance from the inner surface of the upper plate to the second edge is 50% or more of a thickness of the upper plate.

(Aspect 11) The battery cell of any one of aspects 2 to 10, wherein an inclination of the first inclined surface with respect to an axis of the cell case is 1 degree or more and 60 degrees or less.

(Aspect 12) The battery cell of any one of aspects 1 to 11, having one or more of the following characteristics (i) to (iv), respectively alone or in combination: (i) wherein a thickness of the flange portion is less than or equal to a thickness of the upper plate, (ii) wherein the cell case has a circular cross-sectional shape, and the through-hole is formed in a center of the upper plate, (iii) wherein the electrode terminal is riveted to the through-hole of the cell case, or (iv) wherein the sidewall has a tube shape, the upper plate has a plate shape covering a top side of the accommodation space, and the sidewall and the upper plate are formed integrally.

(Aspect 13) The battery cell of any one of aspects 1 to 12, further comprising: a cap plate covering a bottom side of the accommodation space of the cell case, wherein the cap plate is coupled to the cell case.

(Aspect 14) The battery cell of any one of aspects 1 to 12, further comprising: a second current collector electrically connected to a second electrode tab of the electrode assembly; and a cap plate covering a bottom side of the accommodation space of the cell case, wherein the second current collector is electrically connected to at least one of the cap plate or the sidewall of the cell case.

(Aspect 15) A battery module comprising: a plurality of battery cells; and a module housing accommodating the plurality of battery cells, wherein at least one of the plurality of battery cells includes: a cell case including a sidewall forming an accommodation space and an upper plate having a through-hole; an electrode assembly disposed in the accommodation space of the cell case; a first current collector electrically connected to a first electrode tab of the electrode assembly; an electrode terminal electrically connected to the first current collector through the through-hole; and a gasket disposed between the electrode terminal and the upper plate and having electrical insulation properties, wherein the upper plate includes a flange portion formed along an edge of the through-hole, and wherein the flange portion extends toward the inside of the cell case and includes an inclined surface extending from the upper plate.

## Claims

1. A battery cell comprising:
a cell case including a sidewall forming an accommodation space and an upper plate having a through-hole;
an electrode assembly disposed in the accommodation space of the cell case;
a first current collector electrically connected to a first electrode tab of the electrode assembly;
an electrode terminal electrically connected to the first current collector through the through-hole; and
a gasket disposed between the electrode terminal and the upper plate and having electrical insulation properties,
wherein the upper plate includes a flange portion formed along an edge of the through-hole, and
wherein the flange portion extends toward the inside of the cell case and includes an inclined surface extending from the upper plate.

2. The battery cell of claim 1, wherein the inclined surface includes a first inclined surface extending from an outer surface of the upper plate to the inside of the cell case.

3. The battery cell of claim 2, wherein the flange portion further includes an end surface formed at an end portion of the flange portion and connected to the first inclined surface, and
wherein the end surface has an inclination with respect to an inner surface of the upper plate.

4. The battery cell of claim 3, wherein the flange portion further includes a first edge formed at a boundary between the end surface and the first inclined surface and first compressing the gasket inwardly in a radial direction of the cell case.

5. The battery cell of claim 4, wherein a diameter of the through-hole at the first edge is smaller than a diameter of the through-hole at the outer surface of the upper plate.

6. The battery cell of claim 4 or 5, wherein a diameter of the through-hole decreases from the outer surface of the upper plate to the first edge.

7. The battery cell of any one of claims 4 to 6, wherein a thickness of the gasket in the radial direction of the cell case decreases from the outer surface of the upper plate toward the first edge.

8. The battery cell of any one of claims 3 to 7, wherein the inclined surface further includes a second inclined surface extending from the inner surface of the upper plate to the inside of the cell case, and
wherein the flange portion further includes a second edge formed at a boundary between the end surface and the second inclined surface and secondarily compressing the gasket in an inward direction of the cell case.

9. The battery cell of claim 8, wherein the second edge protrudes further into the inside of the cell case than the first inclined surface.

10. The battery cell of claim 8 or 9, wherein a vertical distance from the inner surface of the upper plate to the second edge is 50% or more of a thickness of the upper plate.

11. The battery cell of any one of claims 2 to 10, wherein an inclination of the first inclined surface with respect to an axis of the cell case is 1 degree or more and 60 degrees or less.

12. The battery cell of any one of claims 1 to 11, having one or more of the following characteristics (i) to (iv), respectively alone or in combination:
(i) wherein a thickness of the flange portion is less than or equal to a thickness of the upper plate,
(ii) wherein the cell case has a circular cross-sectional shape, and the through-hole is formed in a center of the upper plate,
(iii) wherein the electrode terminal is riveted to the through-hole of the cell case, or
(iv) wherein the sidewall has a tube shape, the upper plate has a plate shape covering a top side of the accommodation space, and the sidewall and the upper plate are formed integrally.

13. The battery cell of any one of claims 1 to 12, further comprising:
a cap plate covering a bottom side of the accommodation space of the cell case,
wherein the cap plate is coupled to the cell case.

14. The battery cell of any one of claims 1 to 12, further comprising:
a second current collector electrically connected to a second electrode tab of the electrode assembly; and
a cap plate covering a bottom side of the accommodation space of the cell case,
wherein the second current collector is electrically connected to at least one of the cap plate or the sidewall of the cell case.

15. A battery module comprising:
a plurality of battery cells; and
a module housing accommodating the plurality of battery cells,
wherein at least one of the plurality of battery cells includes:
a cell case including a sidewall forming an accommodation space and an upper plate having a through-hole;
an electrode assembly disposed in the accommodation space of the cell case;
a first current collector electrically connected to a first electrode tab of the electrode assembly;
an electrode terminal electrically connected to the first current collector through the through-hole; and
a gasket disposed between the electrode terminal and the upper plate and having electrical insulation properties,
wherein the upper plate includes a flange portion formed along an edge of the through-hole, and
wherein the flange portion extends toward the inside of the cell case and includes an inclined surface extending from the upper plate.
